# EUROPEAN PATENT SPECIFICATION

(11) **EP 0 938 681 B1**
(45) Date of publication and mention of the grant of the patent: **28.01.2004**
(21) Application number: 97948256.9
(22) Date of filing: 13.11.1997
(51) Int. Cl.: G01N 35/10

(54) **AUTOMATIC CHEMISTRY ANALYZER WITH SAMPLE CUP STOPPER PIERCING ASSEMBLY**
AUTOMATISCHE CHEMISCHE ANALYSEVORRICHTUNG MIT MITTEL ZUM DURCHLOCHEN DER PROBENRÖHRCHENSTOPFEN
ANALYSEUR CHIMIQUE AUTOMATIQUE POURVU D'UN ENSEMBLE DE PER AGE DE BOUCHON DE TUBE A ESSAI

(30) Priority: 13.11.1996 US 746649
(43) Date of publication of application: 01.09.1999
(73) Proprietor: Beckman Coulter, Inc., Fullerton, CA 92835 (US)
(72) Inventor: FECHTNER, Harold, F., Fullerton, CA 92834 (US); YANG, Tom, Fullerton, CA 92834 (US); SOHN, Chul, H., Fullerton, CA 92834 (US)
(74) Representative: Ede, Eric
(86) International application number: PCT/US1997/020640
(87) International publication number: WO 1998/021595

(56) References cited:
- EP-A- 0 246 632
- EP-A- 0 549 573
- EP-A- 0 564 970
- WO-A-89/12829
- WO-A-90/11752
- US-A- 4 721 137

## Description

### FIELD OF THE INVENTION

This invention generally relates to the field of automated clinical chemical analyzers, and specifically to high throughput automated chemical analyzers having automated sample container loading assemblies.

### BACKGROUND OF THE INVENTION

A number of different automated clinical chemical analyzers are known in the art. Such analyzers range from simple, largely manually operated instruments to highly complex, nearly fully automated instruments. Each analyzer has its own particular performance characteristics related to the number ("menu") of different tests that the analyzer can perform and the number of samples that can be processed in a given period of time ("throughput").

Large scale, highly complex analyzers useful in large hospitals and clinical laboratories have been developed which have both a large menu of tests which the instrument can perform and a high throughput. Such an analyzer is described in U.S. Patent No, 4,965,049 issued to Lillig at al..

Many such large scale, highly complex analyzers comprise an automated sample loading mechanism designed to mechanically transport sample containers from a convenient loading location to a receiving sits within the analyzer where liquid sample are extracted from the sample containers by suitable liquid extraction equipment. Such automated loading mechanisms minimize operator time required to operate such analyzers and therefore Increase the operaring efficiency of such analyzers.

A significant problem with automatic loading mechanisms of the prior art is that such automatic loading equipment are incapable of efficiently opening the sealed caps on the sample containers to allow the liquid extraction equipment to get at the sample within the container. Accordingly, the sealed caps on the sample containers have to be opened manually. This requires an undue amount of operator time and markedly decreases the operating efficiency of the analyzer.

International Application Publication No. WO 90/11752 discloses a sample container cap piercing tool comprising a base and a downwardly disposed blade attached to a blade support arm capable of up and down movement. The blade is a cylindrical "spike" which makes a relatively large round hole in the container cap. During the cap piercing process, a cylindrical sleeve can be disposed within the hole in the cap to keep the hole in the cap open. A motor can be used to move the blade support arm up and down as a container having a container cap is disposed beneath the blade. There are several problems with this apparatus. First of all, the top of the container is not precisely indexed with respect to the blade. Accordingly, if the container is disposed slightly askew with respect to the blade, the blade will not puncture the container cap at precisely the desired cap hole location. Secondly, the fact that the blade leaves a large, cylindrical hole in the cap means that sample within the container is likely to rapidly evaporate. Also, if, after the container cap has been pierced, the container is inadvertently tipped over during a downstream operation, sample within the container will rapidly flow out of the large cylindrical hole in the container cap.

Accordingly, there is a need for a sample container cap piercing tool which can be efficiently adapted Into the automatic loading mechanism of a large scale, highly complex analyzer so that such automated loading mechanisms are fully automated.

### SUMMARY OF THE INVENTION

The invention as defined by claim 1 satisfies these needs. The invention is a combination for piercing a container cap disposed on the top of a container wherein the top of the container is disposed at a certain location L.

In a preferred embodiment, the combination comprises:
(a) a blade support arm slidably attached to a substantially vertical post such that the blade support arm is capable of travel along the vertical post between an upper blade support arm position, a middle blade support arm position and a lower blade support arm position, the blade support arm having an upper contact surface and a lower contact surface;
(b) a blade attached to the blade support arm and disposed substantially vertically below the blade support arm, the blade being capable of piercing the container cap by downward movement of the blade;
(c) a cap retainer arm having a cap contacting surface capable of contacting and retaining the container cap, the cap retainer arm being slidably attached to the vertical post such that the cap retainer arm is capable of travel along the vertical post between the blade support arm upper contact surface and the blade support arm lower contact surface;
(d) a biasing member for biasing the cap retainer arm towards the blade support arm lower contact surface; and
(e) a motor for sliding the blade support arm up and down along the vertical post between the upper blade support arm position, the middle blade support arm position and the lower blade support arm position;
wherein, (i) at the upper blade support arm position, the blade support arm lower contact surface retains the cap retainer arm so that the cap contacting surface is above location L, (ii) at the middle blade support arm position, the cap contacting surface is allowed to contact a container cap disposed at location L but the blade is disposed higher than location L and (iii) at the lower blade support arm position, the cap contacting surface is allowed to contact a container cap disposed at location L and the blade is disposed immediately below location L.

In a typical embodiment, the blade support arm and the cap retainer arm are slidably attached to a pair of vertical posts which are fixed to the base and the biasing member comprises a pair of springs.

Preferably, the cap contacting surface of the cap retainer arm is recessed to readily accept and retain the cap of the sample container.

The invention is advantageously encompassed into an automated diagnostic machine capable of determining at least one parameter of a liquid disposed within one or more capped sample containers disposed within a loading area. Such a machine typically further comprises: (a) a body; (b) a sample station disposed within the body, the sample station being sized and dimensioned to retain a plurality of sample containers; (c) a reagent station disposed within the body, the reagent station being sized and dimensioned to retain a plurality of reagent containers; (d) an analyzing station disposed within the body, the analyzing station comprising: (i) a reaction container and (ii) an analyzer for analyzing liquids disposed within the reaction container; (e) a sample transfer apparatus for transferring liquid sample from the sample station and reagent from the reagent station to the reaction container; and (f) a sample container loading mechanism for transporting sample containers from a sample container loading area to the sample station.

In such a machine, it is preferable that suitable switching equipment is provided along the sample transfer apparatus so that the motor of the combination is operated automatically as sample containers are transferred into position within the combination.

The invention provides significant improvements over the prior art by providing an apparatus which allows operators of large scale, complex diagnostic analyzers to operate such analyzers in an-almost fully automated mode without substantial operator time having to be expended in the preparation of containers containing samples for analysis.

### DESCRIPTION OF THE DRAWINGS

These and other features, aspects and advantages of the present invention will become better understood with reference to the following description, appended claims and accompanying drawings where:
Figure 1 is a schematic plan view of an automated analyzing machine having features of the invention;
Figure 2 is a front view of an automated analyzing machine having features of the invention with its canopy closed;
Figure 3 is another front view of the automated analyzing machine of Figure 2 shown with its canopy open;
Figure 4A is a perspective of a sample container rack useful in the invention;
Figure 4B is a perspective view of a reaction cuvette useful in the invention;
Figure 4C is a cross-sectional side view of the reaction cuvette shown in Figure 4B;
Figure 5A is a perspective view of a sample probe arm assemble useful in the invention;
Figure 5B is a perspective view of a reagent probe arm assembly;
Figure 5C is a perspective view of a cup analyze probe arm assembly;
Figure 5D is a perspective view of a cuvette stirring rod assembly;
Figure 5E is a perspective view of a cuvette wash station;
Figure 6 is a flow diagram showing a reaction cup combination useful in the invention;
Figure 7 is a flow diagram showing an ion selective reaction cup assembly useful in the invention;
Figure 8 is an exploded perspective view of a sample cap piercing assembly having features of the invention;
Figure 9 is an end view of a blade useful in the sample cup piercing assembly shown in Figure 8;
Figure 10A is a cross-sectional side view of the sample cup piercing assembly shown in Figure 8, wherein the blade support arm is at the upper blade support arm position;
Figure 10B is a cross-sectional side view of the sample cup piercing assembly shown in Figure 8, wherein the blade support arm is at the middle blade support arm position; and
Figure 10C is a cross-sectional side view of the sample cup piercing assembly shown in Figure 8, wherein the blade support arm is at the lower blade support arm position.

### DETAILED DESCRIPTION

The following discussion describes in detail one embodiment of the invention and several variations of that embodiment. This discussion should not be construed, however, as limiting the invention to those particular embodiments. Practitioners skilled in the art will recognize numerous other embodiments as well. For a definition of the complete scope of the invention, the reader is directed to the appended claims.

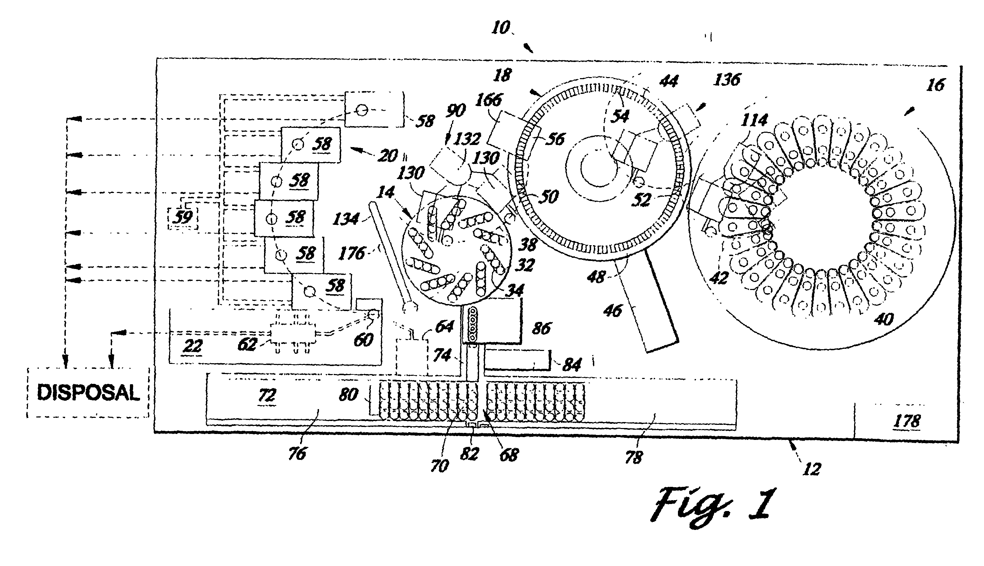

Figures 1 - 3 show an automated analyzing machine **10** having features of the invention. The machine **10** comprises a body **12,** a sample station **14,** a reagent station **16,** a random access analyzing station **18,** a reaction cup analyzing station **20** and an ion selective electrode analyzing station **22.**

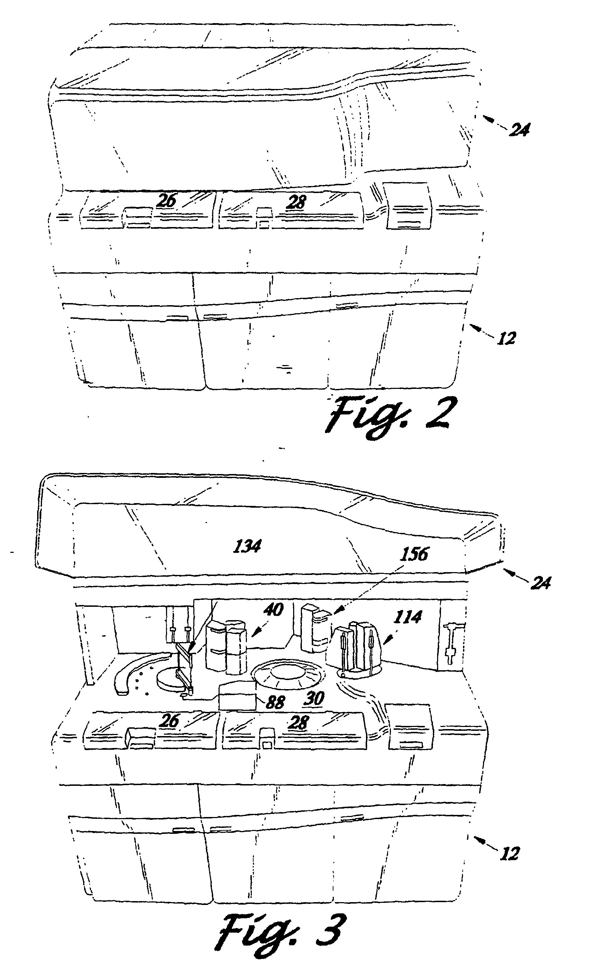

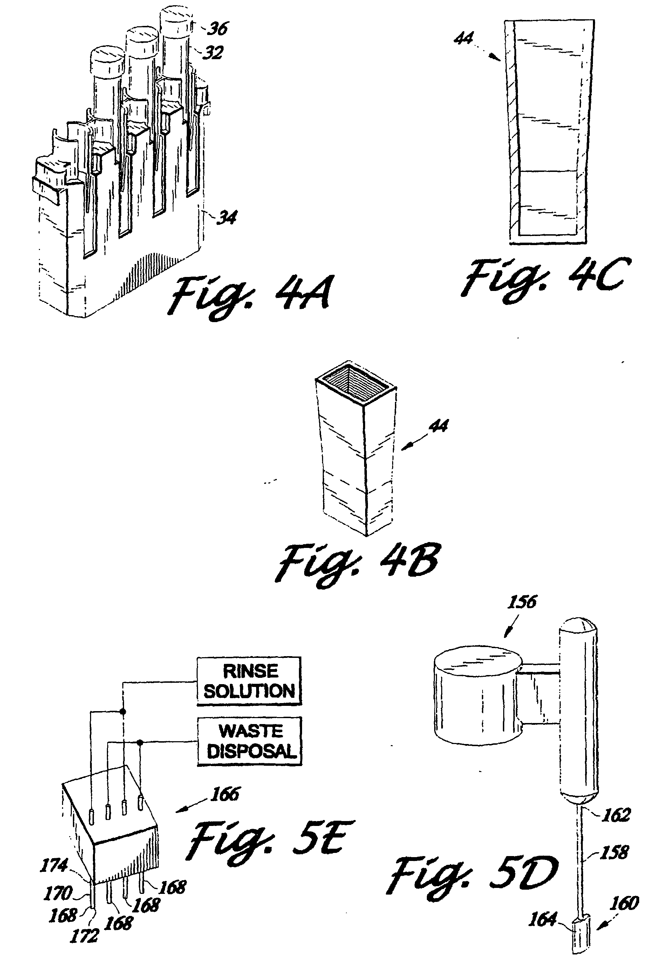

The body **12** is typically a cabinet providing a housing for the various operative components. The body **12** is typically made from a lightweight metal such as a lightweight sheet steel. The embodiment shown in Figures 2 and 3 includes a hinged primary canopy **24.** Figure 2 shows the analyzing machine **10** with the primary canopy **24** closed. Figure 2 shows the machine with the primary canopy **24** open.

Figures 2 and 3 also illustrate how a typical analyzing machine **10** of the invention can have an on-load tray cover **26,** an off-load tray cover **28** and one or more operator area covers **30** covering the sample station **14,** the reagent station **16,** the random access analyzing station **18,** the reaction cup analyzing station **20** and the ion selective electrode analyzing station **22.**

The sample station **14** is sized and dimensioned to retain a plurality of sample containers **32.** In the embodiment shown in Figures 1 - 3, the sample station **14** is a revolving circular carousel capable of retaining **40** sample containers **32** disposed in 10 sample container racks **34.** In a typical embodiment, each sample container **32** is a generally upright container having a container cap **36** of thin rubber or like material. A sample container rack **34** containing four sample containers **32** useful in the invention is shown in Figure 4A. The sample station **14** is moveable by a rotating motor (not shown) such that each sample container **32** can be alternatively positioned under and moved away from at least one sample extraction site **38.**

The reagent station **16** is sized and dimensioned to retain a plurality of reagent containers **40.** Each reagent container **40** contains one or more compartments for retaining one or more different reagents useful in the analysis chemistry performed by the analyzing machine **10.** Also, it is preferable to predilute the reagent to minimize reagent usage and dilution step delays. A preferred reagent container **40** design has three individual compartments and is described in detail in U.S. Patent Nos. 4,970,053 and 5,075,082, which are both incorporated herein by this reference in their entireties.

Preferably, the reagent station **16** is refrigerated, such as to a temperature of about 4°C, to preserve reagent life and minimize evaporation.

In the embodiment shown in Figures 1 - 3, the reagent station **16** is a revolving circular carousel. The reagent station **16** is movable by a rotating motor (not shown) such that each reagent container **40** can be alternatively positioned under and moved away from at least one reagent extraction site **42.**

Preferably, the reagent station **16** also includes a bar code reader (not shown) which reads bar-coded information printed on the reagent containers **40** and/or disposed on the reagent carousel. Such information can be transmitted to a computerized controller to assist in operation of the analyzing machine **10.**

The random access analyzing station **18** is sized and dimensioned to retain a plurality of reaction cuvettes **44** as illustrated in Figures 4B and 4C. In the embodiment shown in Figures 1 - 3, the random access analyzing station **18** is a revolving circular carousel capable of retaining in excess of 100 cuvettes **44.** Each cuvette **44** is a small open top reaction container having at least two opposed transparent sides through which a beam of light can be directed.

The random access analyzing station **18** further comprises random access analyzing station analyzer **46,** such as a nephelometer and/or photometer disposed proximate to a random access analyzing station analyzing site **48** for determining at least one parameter of a sample disposed within the cuvettes **44.**

The random access analyzing station **18** is movable by a rotating motor (not shown) such that each cuvette **44** can be alternatively positioned under and moved away from at least one cuvette sample deposit site **50,** at least one cuvette reagent deposit site **52,** at least one cuvette mixing site **54,** at least one cuvette washing site **56** and the one random access analyzing station analyzing site **48.**

The reaction cup analyzing station **20** comprises at least one reaction cup module **58.** In the embodiment shown in Figure 1, the reaction cup analyzing station **20** comprises six reaction cup modules **58.** Each reaction cup module **58** can be used to measure high volume analyses such as analyses for sodium, potassium, glucose, creatinine and blood urea nitrogen.

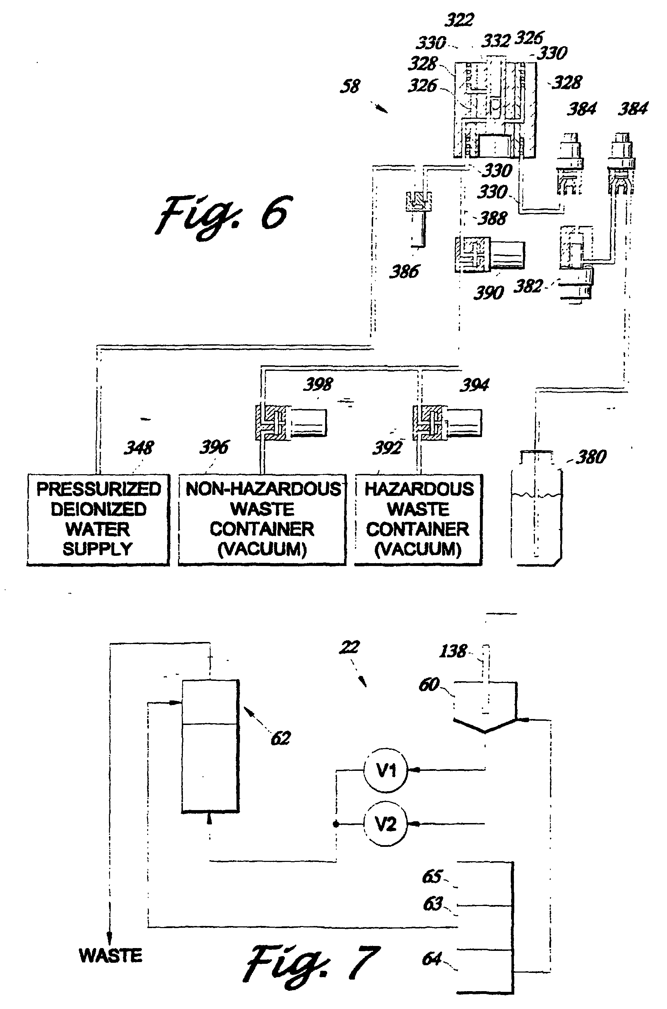

Figure 6 illustrates a flow scheme for a typical reaction cup module. Reagent is provided to a reaction cup **332** via an inlet conduit **330** on one side of the reaction cup module **58** (the right side on Figure 6). Reagent is pumped from a source of reagent **380** by the reagent pump **59** through remote controllable reagent valves **384** into the inlet conduit **330.** Within that portion of the inlet conduit **330** which is partially disposed within the reaction cup module **58,** reagent is heated by a heating element **326** before flowing into the reaction cup **332.** Deionized rinse water is provided to the reaction cup **332** from a pressurized source of deionized water **348** through a remote controllable deionized water valve **386** and into the inlet conduit **330** on the side of the reaction cup module **58** opposite the inlet conduit **330** through which reagent flows into the reaction cup **332.** In that portion of the inlet conduit **330** which is disposed within the reaction cup module 58, deionized rinse water is heated by a second heating element **326** immediately prior to its flow into the reaction cup **332.**

The reaction cup **332** is drained via a drain line **388** through a remote controllable master drain valve **390.** When the liquid to be drained is of a potentially hazardous sort, the liquid is drained to a suitable hazardous waste container **392** through a remote controllable hazardous waste container valve **394.** Where the liquid to be drained is of a non-hazardous sort, the liquid is drained to a suitable non-hazardous waste container **396** through a remote controllable non-hazardous waste container valve **398.** Both the hazardous and non-hazardous waste containers **392** and **396** are typically maintained under vacuum to facilitate rapid and complete draining of liquid from the reaction cup **332.** Because a separate deionized rinse water source **348** is provided to the reaction cup **332,** such deionized rinse water is conveniently and inexpensively used in the rinsing step. Moreover, because water is used in the rinse steps, much of the liquid drained from the reaction cup during the rinsing step can be disposed in a non-hazardous waste disposal area. Note further that because two separate heating elements **326** are used, time lags required for heating are much reduced. This is especially true in analysis operations requiring multiple rinse cycles.

The use of the rinse water system also provides another substantial benefit over the prior art. The analyzing machine **10** using the cup analysis module **58** of the invention can be programmed to periodically and automatically recalibrate a nephelometer used as an analyzer **334,** by briefly filling the reaction **332** cup with pure rinse water and calibrating the nephelometer to a predetermined set point. This eliminates having to periodically shut down the machine **10** and manually calibrating each of the nephelometers used in the various reaction cup modules **58.**

A particularly useful reaction cup module 58 is disclosed in detail U.S. Patent Application Serial No. , entitled , filed contemporaneously herewith, and which is incorporated herein by reference in its entirety.

The ion selective electrode analyzing station **22** comprises a sample injection cup **60** disposed in fluid tight communication with a flow cell analyzer **62** capable of measuring at least one electrolyte in a liquid sample. The ion selective electrode analyzing station **22** can be used to simultaneously analyze for sample electrolytes (and sample components which can be analyzed as electrolytes), such as sodium, potassium, calcium, chlorine and carbon dioxide.

Figure 7 illustrates a simplified flow scheme for a typical ion selective analyzing station **22.** The sample injection cup **60** is disposed in fluid tight communication with an ion selective electrode analyzing station pump **64** capable of pumping at least one ion selective electrode analyzing reagent from a source of such reagent (not shown) through the sample injection cup **60,** through a valve V1, through the flow cell analyzer **62** and then to a suitable waste disposal site. Sample is pressured into the sample injection cup **60** via a cup analysis probe **138** (described below). In the sample injection cup, the sample is mixed with reagent as the reagent is pumped by pump **64** through the sample injection cup **60** and is carried therewith through valve V1 and into the flow cell analyzer.

A CO₂ acid reagent pump **63** capable of pumping CO₂ acid reagent directly into the flow cell analyzer **62** is disposed in fluid tight communication with a source of CO₂ acid reagent (not shown). Also, an ion selective analyzing station reference solution pump **65** is disposed in fluid tight communication with a source of reference solution (not shown). The ion selective electrode analyzing station reference solution pump **65** is capable of pumping reference solution through valve V2 directly into the flow cell analyzer **62.**

In a preferred embodiment, the ion selective electrode analyzing station pump **64,** the CO₂ acid reagent pump **63** and the ion selective electrode analyzing station reference solution pump **65** are driven by a single motor.

A particularly useful ion selective analyzing station **22** is disclosed in detail in U.S. Patent Application Serial No. , entitled , filed contemporaneously herewith, and which is incorporated herein by reference in its entirety.

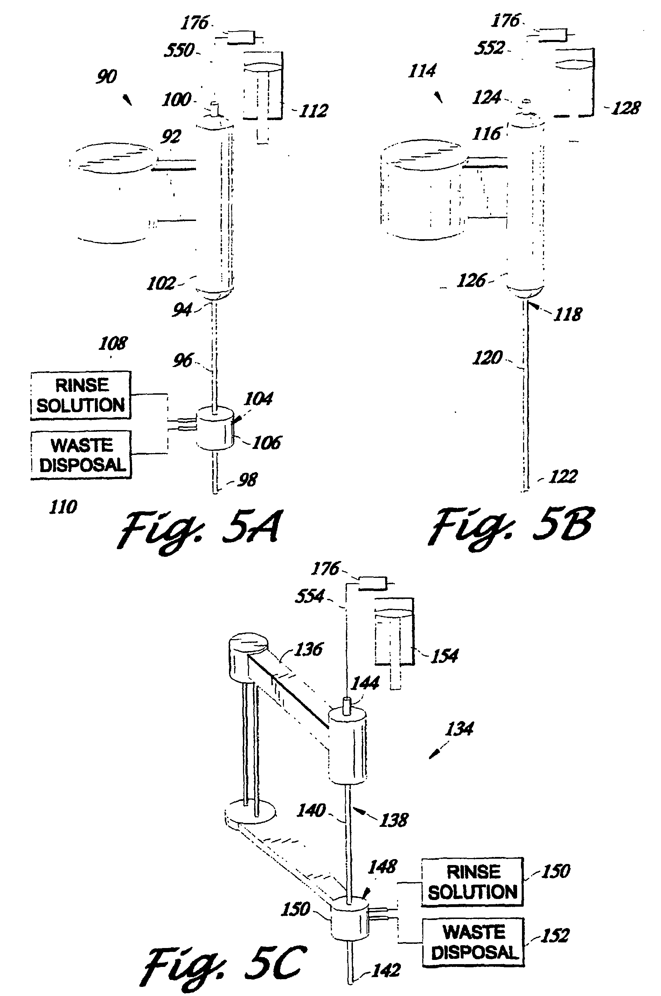

The analyzing machine **10** further comprises a motorized sample probe arm assembly **90** such as shown in Figure 5A. The sample probe arm assembly **90** includes a sample probe arm **92** and a hollow sample probe **94.** The sample probe **94** has an internal chamber **96,** an open lower end **98** and an open upper end **100.** The sample probe **94** is disposed generally vertically in the sample probe arm **92** and is movable by a sample probe motor **102** between a lower sample probe position and an upper sample probe position.

The sample probe **94** can be equipped with a sample probe tip cleaning assembly **104** such as is described in U.S. Patent No. 5,408,891, the entirety of which is incorporated herein by this reference. Such cleaning assembly **104** includes a cleaning assembly chamber **106** connected in fluid tight communication with a source of cleaning liquid **108** and a disposal site **110.**

The sample probe arm **92** is movable by a sample probe arm motor (not shown) between a first sample probe arm position wherein the sample probe is immediately above the sample extraction site **38** and a second sample probe arm position wherein the sample probe is immediately above the cuvette sample deposit site **50.**

The sample probe **94** is connected to a sample probe pressure altering mechanism capable of alternatively applying a positive pressure and a negative pressure to the internal chamber **96** of the sample probe **94.** Such pressure altering mechanism can be any of the various pressure altering mechanisms known in the art. Typically, such pressure altering mechanisms are provided by a syringe pump **112.**

The sample probe arm assembly **90** is used to extract a predetermined quantity of sample from sample container **32** disposed within the sample station **14** at the sample extraction site **38** and transport that quantity of sample to a cuvette **44** disposed within the random access analyzing station **18** at the cuvette sample deposit site **50.**

The analyzing machine **10** further comprises a motorized reagent probe arm assembly **114** such as shown in Figure 5B. The reagent probe arm assembly **114** includes a reagent probe arm **116** and a hollow reagent probe **118.** The reagent probe **118** has an internal chamber **120,** an open lower end **122** and an open upper end **124.** The reagent probe **118** is disposed generally vertically in the reagent probe arm **116** and is movable by a reagent probe motor **126** between a lower reagent probe position and an upper reagent probe position.

The reagent probe arm **116** is movable by a reagent probe arm motor (not shown) between a first reagent probe arm position wherein the reagent probe **118** is immediately above the reagent extraction site **42** and a second reagent probe arm position wherein the reagent probe is immediately above the cuvette reagent deposit site **52.**

The reagent probe **118** is connected to a reagent probe pressure altering mechanism capable of alternatively applying a positive pressure and a negative pressure to the internal chamber **120** of the reagent probe **118.** Such pressure altering mechanism can be any of the various pressure altering mechanisms known in the art. Typically, such pressure altering mechanisms are provided by a syringe pump **128.**

The reagent probe arm **116** is used to extract a predetermined quantity of reagent from a reagent container **40** disposed within the reagent station **16** at the reagent extraction site **42** and transport that quantity of reagent to a cuvette **44** disposed within the random access analyzing station **18** at the cuvette reagent deposit site **52.**

Both the sample probe arm **92** and the reagent probe arm **116** can include multiple independently movable probes. In the embodiment illustrated in the drawings, both the sample probe arm **92** and the reagent probe arm **116** comprise a pair of probes each independently movable about a primary axis of rotation **130.** Both probe arms are also rotatable as a whole about a secondary axis of rotation **132.**

The analyzing machine **10** further comprises a cup analysis probe arm assembly **134** such as shown in Figure 5C. The cup analysis probe arm assembly **134** includes a cup analysis probe arm **136** and a hollow cup analysis probe **138.** The cup analysis probe **138** has an internal chamber **140,** a lower end **142** and an open upper end **144.** The cup analysis probe **138** is disposed generally vertically in the cup analysis probe arm **136** and is movable by a cup analysis probe motor (not shown) between a lower cup analysis probe position and an upper analysis probe position.

The cup analysis probe **138** can be equipped with a cup analysis probe tip cleaning assembly **146** such as is known in the prior art. Such cleaning assembly includes a cleaning assembly chamber **148** connected in fluid tight communication with a source of cleaning liquid **150** and a disposal site **152.**

The cup analysis probe arm **136** is movable by a cup analysis probe arm motor (not shown) between a first cup analysis probe arm position wherein the cup analysis probe is immediately above a sample container **32** in the sample station **14,** a second cup analysis probe arm position wherein the cup analysis probe **136** is immediately above one of the reaction cup modules **58** and a third cup analysis probe arm position wherein the cup analysis probe **136** is immediately above the sample injection cup **60.**

The cup analysis probe **136** is connected to a cup analysis probe pressure altering mechanism capable of alternatively applying a positive pressure and a negative pressure to the internal chamber **140** of the cup analysis probe **136.** Such pressure altering mechanism can be any of the various pressure latering mechanisms known in the art. Typically, such pressure altering mechanisms are provided by a syringe pump **154.**

The cup analysis probe arm assembly **134** is used to extract a predetermined quantity of sample from a sample container **32** disposed within the sample station **14** and transport that quantity to each of the reaction cup modules **58** and to the sample injection cup **60.**

The analyzing machine **10** further comprises a cuvette stirring rod assembly **156** such as shown in Figure 5D. The cuvette stirring rod arm assembly **156** includes an elongate rotatable cuvette stirring rod **158** having a lower end **160** and an upper end **162.** The lower end **160** of the cuvette stirring rod includes a cuvette stirring rod paddle **164** attached thereto. The cuvette stirring rod is generally disposed vertically and is movable between a lower cuvette stirring rod position and an upper stirring rod position. The cuvette stirring rod arm assembly **156** is positionable above the cuvette mixing site **54.** As illustrated by the embodiments shown in the drawings, the motorized cuvette stirring rod assembly **156** can be an independent and separate assembly or it can be integrated with the sample probe arm **92** and/or the reagent probe arm **116.**

The analyzing machine **10** further comprises a cuvette wash station **166** as shown in Figure 5E. The cuvette wash station probe **168** is used to extract liquid reaction mixtures from the cuvettes **44,** dispose such mixtures to a suitable disposal site and then rinse and clean the cuvette **44** so that it can be used to analyze another quantity of sample.

The wash station **166** comprises one or more motorized cuvette wash station probes **168.** Each wash station probe **168** has an internal chamber **170**, an open lower end **172** and an open upper end **174.** The wash station probe **168** is disposed generally vertically above the cuvette washing site **56** in the random access analyzing station **18** and is movable by a wash station probe motor (not shown) between a lower wash station probe position and an upper wash station probe position.

In the embodiment shown in the drawings, the wash station probes **168** operated in pairs, one of each pair of wash station probes **168** being connected to a source of pressurized rinse solution and the other wash station probe **168** of each pair being connected to a disposal system adapted to vacuum out the contents of a cuvette and transfer such contents to a suitable disposal site.

Alternatively, each individual wash station probe **168** can be connected to a wash station probe pressure altering mechanism capable of alternatively applying a positive pressure and a negative pressure to the internal chamber **170** of the wash station probe **168.** The wash station probe pressure altering mechanism includes a mechanism for providing pressurized washing liquid from a source of washing liquid to the wash station probe **168** for washing a cuvette disposed at the cuvette washing site **56** and a mechanism for providing a negative pressure to the interior chamber **170** of the wash station probe **168** for removing waste liquids from a cuvette disposed at the cuvette washing site **56** and for transferring such waste liquids to a disposal site. Such a mechanism for providing negative pressure to the interior chamber **170** typically comprises a source of vacuum.

Each of the pressure altering mechanism usable in the analyzing machine can further comprise an obstruction detector **176** comprising a pressure transducer operatively installed within the operative pressure transmitting conduits to alert the operator and/or shut down the machine should an obstructive pressure drop be detected within the pressure altering mechanism. Such an obstruction detector **176** is described in detail in U.S. Patent Application Serial No. , entitled , filed contemporaneously herewith, and which is incorporated herein in its entirety.

Typically, the automated analyzing machine **10** further comprises a controller **178** for controlling each of the various motors in a way which provides for the smooth, efficient and rapid operation of the machine **10.** The control is typically also used to retain and report analysis data. Preferably, the controller **178** comprises a digital computer which can be preprogrammed with a large variety of operating instructions depending upon the samples being analyzed, the analyses to be run and the reagents at hand. Most preferably, the digital computer receives bar coded information regarding each of the samples to be analyzed, and the reagents in the reagent station **16** and uses that information to most efficiently conduct the analyses. Also, it is preferable that the controller **178** keep track of the amounts of reagents used so as to alert the operator whenever reagent in any particular reagent container **40** begins to run low.

Also, it is preferable that the controller **178** include a "stat" mode, which gives the operator the ability to require the machine **10** to analyze particularly important samples in the reaction cup and ion selective electrode analyzing stations ahead of all other samples.

In the embodiment shown in the drawings, the analyzing machine **10** further comprises a sample container loading and preparation assembly **68.** The loading and preparation assembly **68** comprises a loading mechanism **70** for loading one or more sample containers from a loading area **72** to the sample station **14** along a loading mechanism path **74.** The loading mechanism **70** comprises an on-load tray **76** and an off-load tray **78.** In the embodiment shown in Figure 1, the on-load tray **76** and the off-load tray **78** are sized and dimensioned to retain a plurality of sample container racks **34.** The on-load tray **76** has a motorized loading arm **80** for pushing a plurality of sample container racks **34** towards the loading mechanism path **74.** The off-load tray **78** has a motorized unloading arm (not shown) for pushing the sample container racks **34** away from the loading mechanism path **74.**

The loading mechanism path **74** has a motorized loading path arm **82** which moves a single sample container rack **34** along the loading mechanism path **74** on to and off from the sample station **14.** A bar code reader **84** is typically disposed along the loading mechanism path **74.** The bar code reader **84** is capable of reading bar coded information disposed on each individual sample container **32** as the sample container **32** moves along the loading mechanism path **74.**

In the embodiment shown in Figure 1, the sample container loading and preparation assembly **68** further comprises a sample container cap piercing mechanism **86** capable of piercing the sample container caps **36** so as to leave the caps **36** open for access by the sample probe **94.** As illustrated in Figures 2 and 3, the sample container cap piercing mechanism **86** can be disposed under a sample cap piercing mechanism cover **88.**

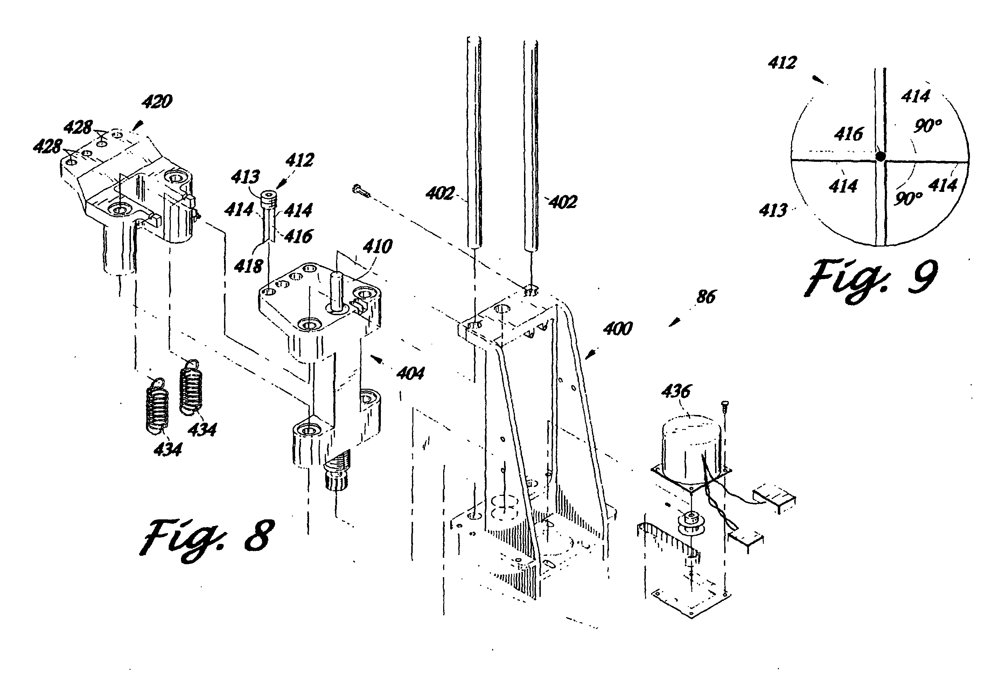

Figures 8-10 illustrate a preferred embodiment of the sample container cap piercing mechanism **86** in detail. The sample cap piercing mechanism **86** comprises a base **400** having a fixed pair of vertical posts **402.** Slidably attached to the two vertical posts **402** is a blade support arm **404.** The blade support arm **404** has a lower blade support arm surface **406** and an upper blade support arm surface **408.** Operatively disposed within the center of the blade support arm **404** is a drive element **410,** such as a worm gear, for driving the blade support arm **404** up and down along the vertical posts **402.**

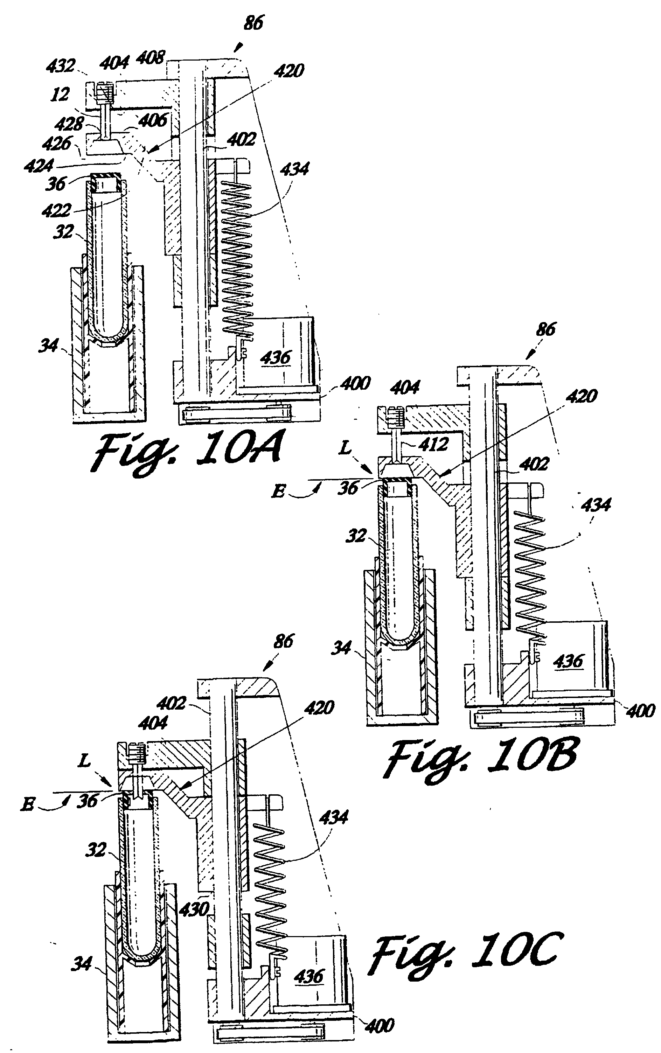

Fixed within the blade support arm **404** is at least one blade **412**. The blade **412** typically has a base **413** and a plurality of piercing sections **414.** A preferred blade **412** has three or more piercing sections **414** disposed in vertical planes which intersect along a single axis **416,** each such plane being spaced apart from adjoining planes by equal angles. Figure 10 illustrates a preferred blade **412** having four piercing sections **414** spaced apart from adjoining piercing sections **414** by 90°.

Preferable each piercing sections **414** has the shape of a right triangle, wherein the point **418** is disposed further from the single axis **416** than any other portion of the piercing section **414.**

Also slidably disposed along the vertical posts is a cap retainer arm **420.** The cap retainer arm **420** has an upper cap retainer arm surface **422** and a lower retainer arm surface **424.** The lower retainer arm surface **424** defines a cap retainer surface **426,** which is preferably recessed to accept and retain the cap **36** on a sample container **32.** The cap retainer arm **420** has openings **428** which are aligned with the blade **412** disposed within the blade support arm **404.** Each opening **428** is large enough to allow the blade **412** to pass through the cap retainer arm **420.**

As illustrated in Figures 10A, 10B and 10C, the blade support arm **404** is capable of traveling between an upper blade support position (illustrated in Figure 10A), a middle support arm position (illustrated in Figure 10B) and a lower blade support position (illustrated in Figure 10C), so as to pierce the cap **36** of a sample container **32** when the cap **36** is disposed at a location L which is at an elevation E.

The blade support arm **404** has a lower contact surface **430** for contacting a lower portion of the cap retainer arm **420** and an upper contact surface **432** for contacting an upper portion of the cap retainer arm **420.** The cap retainer arm **420** is slidably attached to the vertical posts **402,** such that the cap retainer arm **420** is capable of traveling along the vertical posts **402** between the blade support arm upper contact surface **432** and the blade support arm lower contact surface **430.** At least one biasing member **434** is used to bias the cap retainer arm **420** towards the blade support arm lower contact surface **430.**

A motor **436** is used to operate the drive element **410** to slide the blade support arm **404** up and down along the vertical posts **402** between the upper blade support arm position, the middle blade support arm position and the lower blade support arm position.

As illustrated in Figure 10A, when the blade support arm **404** is in the upper blade support arm position, the blade support arm lower contact surface **430** engages the cap retainer arm **420** and retains the cap retainer arm **420** at an elevation spaced apart from the location L and above elevation E. Thus, when the blade support arm **404** is in the upper blade support arm position, sample containers **32** can be moved along the loading mechanism path **74** without being obstructed by the cap retainer arm **404.**

As illustrated in Figure 10B, when the blade support arm **404** is lowered to the middle blade support arm position, the cap contacting surface **426** on the underside of the cap retainer arm **420** travels downwardly to the location L. At this location, the cap contacting surface **426** is capable of contacting, engaging and retaining the cap **36** on the top of a sample container **32** disposed along the loading mechanism path **74.** Because of the downward pressure provided by the biasing member **434,** the cap retainer arm **420** firmly retains the sample container **32** in place during the remainder of the cycle wherein the sample container cap **36** is pierced by the blade **412.** Preferably, the cap contacting surface **426** is recessed to facilitate the engaging and retaining of the sample container cap **36.**

At the moment when the cap contacting surface **426** contacts the sample container cap **36,** when the blade support arm is at the middle blade support arm **404** position, the blade **412** is disposed apart from the location L, above elevation E, and, therefore, does not (yet) penetrate the sample container cap **36.** However, as the blade support arm **404** continues downwardly from the middle blade support arm position to the lower blade support arm position, the blade **412** travels through the opening **428** in the cap retainer arm **420** to an elevation below E immediately below the location L, thereby piercing the sample container cap **36** with the piercing sections **44** of the blade **412.**

Typically, the downward travel of the blade support arm **404** is terminated when the blade support arm upper contact surface **432** contacts the cap retainer arm **420.**

After the sample container cap **36** has been pierced, the motor **436** causes the blade support arm **404** to slide upwardly along the posts **402** to the upper blade support arm position. This action causes the lower contact surface **430** of the blade support arm **404** to push the cap retainer arm **420** upwardly against the biasing pressure of the biasing member **434** to an elevation above elevation E. The sample container **32** -- now having a pierced sample container cap **36** -- is thereby freed up so that it can be further moved along the loading mechanism path **74** to the sample station **14.**

In operation, the operator of the automated analyzing machine of the invention **10** places samples to be analyzed in individual sample containers **32** and places each sample container **32** in one or more sample container racks **34.** The sample container racks **34** are placed in the on-load tray **76.**

The motorized loading arm **80** pushes sample container racks **34** in the on-load tray **76** towards the loading mechanism path **74.** As each sample container rack **34** enters the loading mechanism path **74,** the motorized loading path arm **82** pushes the sample container rack **34** along the loading mechanism path **74** towards the sample station **14**.

As the sample containers **32** pass by the bar code reader **84,** bar-coded information appended to each sample, container **32** is read by the bar code reader **84** and is transmitted to the controller **178.** Such bar code coded information typically includes the identity of the sample and the analyses which are to be run using individual portions of the sample.

As the sample container rack **34** is pushed further along the loading mechanism path **74,** it passes under the cap piercing mechanism **86** to the location L. The cap piercing mechanism **86** thereat pierces the caps **36** on each of the sample containers **32.**

The sample container rack **34** then is pushed further along the leading mechanism path **74** to the sample station **14** wherein a clamping mechanism within the sample station **14** holds the sample container rack **34** firmly upright.

The sample station **14** is rotated under the control of the controller **178.** When an individual sample container **32** is placed at a sample extraction site **38,** a small quantity of the sample is extracted from the sample container **32** by the sample probe **94.** This is accomplished by positioning the sample probe **94** above the sample extraction site **38,** lowering the sample probe **94** to the lower sample probe position wherein the open-ended lower end **98** of the sample probe **94** is placed below the surface of the sample within the sample container **32.** A small quantity of the sample is then extracted into the sample probe internal chamber **96** by drawing a vacuum on the sample probe internal chamber **96** using the sample probe pressure altering mechanism. The sample probe **94** is then raised to the upper sample probe position and the sample probe arm **92** moves the sample probe **94** to a position where it is directly above the cuvette sample deposit site **50.**

At the cuvette sample deposit site **50,** the sample probe **94** is again lowered to the lower sample probe position and the quantity of sample within the sample probe **94** is deposited into a cuvette **44** positioned at the cuvette sample deposit site **50.** This is done by creating a slight elevated pressure within the sample probe internal chamber **96** using the sample probe pressure altering mechanism. The lower end of the sample probe **94** is then retracted into the sample probe tip cleaning assembly **104** where it is rinsed using cleaning liquid from the source of cleaning liquid **108.** After cleaning, the cleaning liquid is flushed to a suitable disposal site **110.** The sample probe **94** is then ready to extract another quantity of sample from another sample container **32.**

Contemporaneously with the above-described action of the sample probe **94,** the reagent probe **118** is used in similar fashion to extract a quantity of an appropriate pre-mixed reagent from the reagent station **16** and depositing that quantity of reagent into the cuvette **44.** Usually the reagent is added to the cuvette immediately prior to the deposit of the sample within the cuvette **44.**

After sample and reagent are both added to the cuvette **44,** the cuvette **44** is rotated to the cuvette mixing site **54.** At the cuvette mixing site **54,** the cuvette stirring rod **158** is lowered to the lower cuvette stirring rod position and the stirring rod paddle **164** is rotated so as to agitate and thoroughly mix the sample and reagent within the cuvette **44.**

In typical random access analyzing operations wherein analyses are carried out at an elevated temperature, the mixture of sample and reagent within the cuvette **44** is then allowed to stand within the random access analyzing station **18** while the mixture is brought up to temperature, such as by blowing heated air through the random access analyzing station **18.** When the mixture within the cuvette **44** has reached proper temperature, the contents of the cuvette **44** are analyzed using the random access analyzing station analyzer **46.** In a preferred operation, the cuvette **44** is placed at the random access analyzing station analyzing site **46** a plurality of times and is thereby analyzed a plurality of times so that the reportable results are derived from an average of the plurality of analyses. The reportable results are thereby extremely reliable.

After analyses are completed regarding the mixture within the cuvette **44,** the cuvette **44** is moved to the cuvette washing site **56** at the cuvette wash station **166.** At the cuvette wash station **166,** a wash station probe **168** is moved from its upper probe position to the lower probe position and the reaction mixture is extracted using the wash station pressure altering mechanism. Depending upon the kind of mixture which had been analyzed within the cuvette **44,** the cuvette **44** is then rinsed once or several times using pressurized washing liquid. After the rinse liquid is removed from the cuvette **44** and sent to suitable disposal, the cuvette **44** is ready to accept another sample for analysis.

Contemporaneously with the operation of the random access analyzing station **18,** high volume analyses are performed in the reaction cup analyzing station **20** and in the ion selective electrode analyzing station **22.** First, a predetermined quantity of an appropriate reagent is pumped into each reaction cup **332** and into the injection sample cup **60** using the reagent pump **59.** The magnetic stirrer is engaged. Then, the cup analysis probe arm assembly **134** positions the cup analysis probe **136** above a sample container **32** within the sample station **14,** the cup analysis probe **136** is towered to the lower probe position and a relatively large quantity of sample is extracted into the internal chamber **140** within the cup analysis probe **138** using the cup analysis probe pressure altering mechanism. The cup analysis probe **138** is then raised to the upper probe position and the cup analysis probe arm **136** moves the cup analysis probe **138** to a position directly above one of the reaction cup modules **58.** The cup analysis probe **138** is lowered to the lower cup position and a portion of the sample within the cup analysis probe **138** is deposited within the reaction cup **332.** The cup analysis probe **138** is then again raised to the upper probe position and the cup analysis probe arm **136** moves the cup analysis probe **138** to immediately above each of the other reaction cup modules **58** and deposits a portion of the sample within each such reaction cups **332.**

When all of the reaction cups **332** are filled, the cup analysis probe arm **136** moves the cup analysis probe **138** to directly above the sample injection cup **60.** The cup analysis probe **138** is again lowered to the lower probe position and the remainder of the sample is deposited within the injection sample cup **60.**

After the mixture of reagent and sample is thoroughly mixed by the magnetic stirrer, the mixture is analyzed using the reaction cup analyzing station analyzer **334** in each cup module, and the results of the analyses are reported to the controller **178.** The reaction cups **332** are then rinsed and ready for another sample.

Contemporaneously, in the ion specific electrode analysis station, the quantity of sample within the injection sample cup **60** is thoroughly flow mixed with the reagent. After the sample and reagent are properly mixed, the mixture is passed through the flow cell **62** where individual electrodes within the flow cell **62** each perform a single analysis on the mixture. The results of the analysis are reported to the controller **178.** The mixture is then drained to a suitable disposal site **66** and the system is rinsed in preparation for the analysis of another sample.

After the sample within each of the sample containers **32** in a sample container rack **34** are analyzed, the sample container rack **34** is removed from the sample station **14** using the motorized loading path arm **82.** The sample container rack **34** is retracted along the loading mechanism path **74** to the off-load tray **78.** Once in the off-load tray **78,** the motorized unloading arm pushes the sample container rack **34** towards the end of the off-load tray **78** where it is removed by the operator.

Although the present invention has been described in considerable detail with reference to certain preferred versions thereof, other versions are possible provided that they fall within the scope of the appended claims.

## Claims

1. A combination for piercing a container cap disposed on the top of a container at a location L, the combination comprising a base (400), a blade support arm (404) movably attached to the bass, and a blade (412) attached to the blade support arm, the combination **characterized by**:
(a) the blade comprises a plurality of piercing sections (414), each piercing section being disposed in a vertical plane, each piercing section comprising a piercing point (418), each of the piercing points being disposed spaced apart from one another;
(b) the blade support arm is attached to the base such that the blade support arm Is capable of vertical movement between a first blade support arm position wherein the blade is disposed spaced apart from the location L and a second blade support arm position within the blade is disposed immediately below the location L; and
(c) means for causing the movement of the blade support arm from the first blade support arm position to the second blade support arm position;
so that when a container cap is disposed at the cap retainer location L, the container cap can be pierced by the downward movement of the blade as the blade support arm travel from the first blade support arm position to the second blade support arm position.

2. The combination as claimed in claim 1 further **characterized by**:
(a) a cap retainer arm (420) moveably attached to the base, the cap retainer arm having a cap contacting surface capable of contacting and retaining the container cap, the cap retainer arm being attached to the base in such a way that the cap retainer arm is capable of movement between a first cap retainer arm position wherein the cap contacting surface is spaced apart from the location L and a second cap retainer arm position wherein the cap retaining surface is disposed substantially at the location L; and
(b) a motor (436) for causing the serial movement of (i) the cap retainer arm from the first cap retainer arm position to the second cap retainer arm position, (ii) the blade support arm from the first blade support arm position to the second blade support arm position, (iii) the blade support arm from the second blade support arm position to the first blade support arm position, and (iv) the cap retainer arm from the second cap retainer arm position to the first cap retainer arm position;
so that, when a container cap is disposed at the location L, the container cap can be serially (i) retained by the cap retainer arm, (ii) pierced by the blade, (iii) released from contact with the blade, and (iv) released from contact with the cap retainer arm.

3. The combination as claimed in claim 2 wherein the top of the container is at an elevation E, wherein the blade support arm is alidably attached to a substantially vertical post (402) such that the blade support arm is capable of travel along the vertical post between the upper blade support arm position, a middle blade support arm position and the lower blade support arm portion, the blade support arm having an upper contact surface and a lower contact surface;
and further **characterized by**:
(a) the cap retainer arm having a cap contacting surface (426) capable of contacting and retaining the container cap, the cap retainer arm being slidably attached to the vertical post such that the cap retainer arm is capable of travel along the vertical post between the blade support arm upper contact surface and the blade support arm lower contact surface; and
(b) a biasing member (434) for biasing the cap retainer arm towards the blade support arm lower contact surface; and
wherein the motor is capable of sliding the blade support arm up and down along the vertical post between the upper blade support arm position, the middle blade support arm position and the lower blade support arm position; and
wherein, (i) at the upper blade support arm position, the blade support arm lower contact surface retains the cap retainer arm so that the cap contacting surface is higher than E, (ii) at the middle blade support arm position, the cap contacting surface is allowed to contact a container cap disposed at E but the blade is disposed higher than E and (iii) at the lower blade support arm position, the cap contacting surface is allowed to contact a container cap disposed at E and the blade is disposed below E.

4. The combination claimed in claim 3 wherein the blade support arm and the cap retainer arm are slidably attached to a pair of substantially vertical posts (402) disposed in parallel.

5. The combination claimed in claim 3 wherein the biasing member (434) comprises at least one spring.

6. The combination claimed in claim 3 wherein the cap contacting surface (426) of the cap retainer arm is recessed.

7. The device claimed in claims 1 or 2 wherein the blada comprises three or more piercing sections (414), each piercing section being disposed in a vertical plane and all of the vertical planes being disposed so that they intersect along a single vertical axis (416) with each plane being spaced apart from adjoining planes by equal angles.

8. The combination claimed in claim 7 wherein each piercing section (414) comprises a point (418) which has the shape of a right triangle.

9. The combination claimed in claim 7 wherein the blade comprises four piercing sections (414), each spaced apart from adjoining piercing sections by about 90 degrees.

10. The combination claimed in claim 1 further comprising a device for determining at least one parameter of a liquid in one or more capped sample containers disposed in a loading area, the device comprising:
(a) a body (12);
(b) a sample station (14) disposed within the body, the sample station being sized and dimensioned to retain a plurality of sample containers;
(c) a reagent station (16) disposed within the body, the reagent station being sized and dimensioned to retain a plurality of reagent containers;
(d) an analyzing station (18) disposed within the body, the analyzing station comprising: (1) a reaction container and (2) an analyzer for analyzing liquids disposed within the reaction container;
(e) a sample transfer mechanism for transferring liquid sample from the sample station and reagent from the reagent station to the reaction container, the sample transfer mechanism comprising a hollow sample probe (94) and a sample probe pressure altering mechanism (112) for alternatively applying a positive pressure and a negative pressure to the hollow interior of the sample probe; and
(f) a sample container loading and preparation assembly comprising a loading mechanism (70) for moving one or more vertically disposed capped sample containers from the loading area to the sample station along a loading mechanism path, wherein the location of the caps of the sample containers is at L and the combination for piercing a container cap is disposed along the loading mechanism path.

11. The combination claimed in claim 1 further comprising a device for determining at least one parameter of a liquid in one or more capped sample containers disposed in a loading area, the device comprising:
(a) a body (12);
(b) a motorized sample station (14) disposed within the body, the sample station being sized and dimensioned to retain a plurality of sample containers and having a sample extraction site, the sample station being movable within the body such that, when the sample station retains a plurality of sample containers, individual sample containers can alternatively be moved to and away from the sample extraction site;
(c) a motorized reagent station (16) disposed within the body, the reagent station being sized and dimensioned to retain a plurality of reagent containers and having a reagent extraction site, the reagent station being movable within the body such that, when the reagent station retains a plurality of reagent containers, individual reagent containers can alternatively be moved to and away from the reagent extraction site;
(d) a motorized random access analyzing station (18) disposed within the body, the random access analyzing station being sized and dimensioned to retain a plurality of cuvettes and having a cuvette sample deposit site, a cuvette reagent deposit site, a cuvette mixing site, a cuvette washing site, a random access analyzing station analyzing site and an analyzer disposed proximate to the random access analyzing station analyzing site for determining at least one parameter of a sample disposed within the cuvettes, the random access analyzing station being movable within the body such that, when the random access analyzing station retains a plurality of cuvettes, Individual cuvettes can alternatively be moved to and away from (1) the cuvette mixing site, (2) the cuvette washing site and (3) the random access analyzing station analyzing site;
(a) a reaction cup analyzing station (20) disposed within the body, the reaction cup analyzing station comprising: (1) a reaction cup, (2) an analyzer for analyzing liquids disposed within the reaction cup and (3) a reaction cup analyzing station pump mechanism for pumping reaction cup analyzing station reagent from a source of reaction cup analyzing station reagent to the reaction cup and for pumping the contents of the reaction cup to a suitable disposal site;
(f) an ion selective electrode analyzing station (22) disposed within the body, the ion selective analyzing station comprising: (1) a sample injection cup in fluid tight communication with a flow call analyzer for measuring at least one electrolyte in a liquid sample and (2) an lon selective electrode analyzing station pump mechanism for pumping ion selective electrode analyzing station reagent from a source of ion selective electrode analyzing station reagent to the sample injection cup and for pumping the contents of the sample reaction cup through the flow call analyzer and then to a suitable disposal site;
(g) a motorized sample probe arm assembly (90) attached to the body, the sample probe arm assembly including (1) a sample probe arm and (2) a hallow sample probe having an internal chamber, an open lower end and an open upper and, the sample probe being disposed generally vertically, the sample probe being vertically movable between a lower sample probe position and an upper sample probe position, the sample probe arm being movable between a first sample probe arm position wherein the sample probe is immediately above the sample extraction site and a second sample probe arm position wherein the sample probe is immediately above the cuvette sample deposit site;
(h) a sample probe pressure altering mechanism (112) for alternatively applying a positive pressure and a negative pressure to the interior chamber of the sample probe;
(i) a motorized reagent probe arm assembly (114) attached to the body, the reagent probe arm assembly including (1) a reagent probe arm and (2) a hollow reagent probe having an internal chamber, an open lower end and an open upper end, the reagent probe being disposed generally vertically, the reagent probe being vertically movable between a lower reagent probe position and an upper reagent probe position, the reagent probe arm being movable between a first reagent probe arm position wherein the reagent probe is immediately above the reagent extraction site and a second reagent probe arm position wherein the reagent probe is immediately above the cuvette reagent deposit site;
(j) a reagent probe pressure altering mechanism (118) for alternatively applying a positive pressure and a negative pressure to the interior chamber of the reagent probe;
(k) a motorized cuvette stirring rod arm assembly (166) attached to the body, the cuvette stirring rod arm assembly including an elongate rotatable cuvette stirring rod having a lower and and an upper end, the lower end of the cuvette stirring rod including a cuvette stirring rod paddle attached thereto, the cuvette stirring rod being disposed generally vertically, the cuvette stirring rod being movable between a lower cuvette stirring rod position and an upper cuvette stirring rod position, the cuvette stirring rod arm being positionable above the cuvette mixing site;
(f) a cup analysts probe arm assembly (134) attached to the body, the cup analysis probe arm assembly including (1) a motorized cup analysis probe arm and (2) a hollow, motorized cup analysis probe having an internal chamber, an open lower end and an open upper end, the cup analysis probe being vertically movable between a lower cup analysis probe position and an upper cup analysis probe position, the cup analysis probe arm being movable between a first cup analysis probe arm position wherein the cup analysis probe is immediately above a sample container, a second cup analysis probe arm position wherein the cup analysis probe is immediately above the reaction cup and a third cup analysis probe arm position wherein the cup analysis probe is immediately above the injection sample cup;
(m) a cup analysis probe (136) pressure altering mechanism for alternatively applying a positive pressure and a negative pressure to the interior chamber of the cup analysis probe;
(n) a cuvette wash station (166) attached to the body, the cuvette wash station including a hollow motorized cuvette wash station probe having an internal chamber, an open lower end and an open upper end. the cuvette wash station being disposed such that the cuvette wash station probe is immediately above the cuvette washing site;
(o) a sample container loading and preparation assembly comprising a loading mechanism (70) for moving one or more vertically disposed capped sample containers from the loading area to the sample station along a loading mechanism path, wherein the elevation of the caps of the sample containers is E, wherein the combination for piercing the cap of the sample containers is disposed along the loading mechanism path and upstream of the sample extraction site.

## Patentansprüche

1. Kombination zum Durchstechen bzw. Durchlochen eines Behälterstopfens bzw. einer Behälterkappe, der bzw. die an der Oberseite eines Behälters an einem Ort L angeordnet ist, wobei die Kombination eine Basis (400), einen Klingensupportarm (404), der bewegbar an der Basis angelenkt bzw. festgelegt ist, und eine Klinge (412) umfaßt, die an dem Klingensupportarm angelenkt ist, wobei die Kombination **gekennzeichnet ist durch**:
(a) die Klinge umfaßt eine Mehrzahl von Durchlochungsabschnitten (414), wobei jeder Durchlochungsabschnitt in einer vertikalen Ebene angeordnet ist, wobei jeder Durchlochungsabschnitt einen Durchlochungspunkt (418) umfaßt, wobei jeder der Durchlochungspunkte voneinander beabstandet angeordnet ist;
(b) der Klingensupportarm ist an der Basis derart angelenkt, daß der Klingensupportarm zu einer Vertikalbewegung zwischen einer ersten Klingensupportarmposition, worin die Klinge von dem Ort L beabstandet ist, und einer zweiten Klingensupportarmposition bewegbar ist, worin die Klinge unmittelbar unter dem Ort L angeordnet ist; und
(c) Mittel, um die Bewegung des Klingensupportarms von der ersten Klingensupportarmposition zu der zweiten Klingensupportarmposition zu veranlassen;
so daß, wenn eine Behälterkappe an dem Kappenrückhalteort L angeordnet ist, die Behälterkappe **durch** die nach unten gerichtete Bewegung der Klinge durchlocht werden kann, wenn sich der Klingensupportarm von der ersten Klingensupportarmposition zu der zweiten Klingensupportarmposition bewegt.

2. Kombination nach Anspruch 1, weiters **gekennzeichnet durch**:
(a) einen Kappen- bzw. Stopfenrückhaltearm (420), der bewegbar an der Basis angelenkt ist, wobei der Kappenrückhaltearm eine die Kappe kontaktierende Oberfläche aufweist, die fähig ist, die Behälterkappe zu kontaktieren und zurückzuhalten, wobei der Kappenrückhaltearm an der Basis in einer derartigen Weise angelenkt ist, daß der Kappenrückhaltearm zu einer Bewegung zwischen einer ersten Kappenrückhaltearmposition, worin die Kappenkontaktoberfläche von dem Ort L beabstandet ist, und einer zweiten Kappenrückhaltearmposition fähig ist, worin die kappenrückhalteoberfläche im wesentlichen an dem Ort L angeordnet ist; und
(b) einen Motor (436), um die serielle Bewegung von (i) des Kappenrückhaltearms von der ersten Kappenrückhaltearmposition zu der zweiten Kappenrückhaltearmposition, (ii) des Klingensupportarms von der ersten Klingensupportarmposition zu der zweiten Klingensupportarmposition, (iii) des Klingensupportarms von der zweiten Klingensupportarmposition zu der ersten Klingensupportarmposition, und (iv) des Kappenrückhaltearms von der zweiten Kappenrückhaltearmposition zu der ersten Kappenrückhaltearmposition zu veranlassen;
so daß, wenn eine Behälterkappe an dem Ort L angeordnet ist, die Behälterkappe seriell (i) **durch** den Kappenrückhaltearm zurückgehalten werden kann, (ii) **durch** die Klinge durchstochen werden kann, (iii) von dem Kontakt mit der Klinge freigegeben werden kann, und (iv) von dem Kontakt mit dem Kappenrückhaltearm gelöst werden kann.

3. Kombination nach Anspruch 2, worin die Oberseite des Behälters an einer Höhe bzw. Erhöhung E angeordnet ist, worin der Klingensupportarm gleitbar an einem im wesentlichen vertikalen Lager bzw. Pfeiler (402) so angeordnet ist, daß der Klingensupportarm fähig ist, sich entlang des vertikalen Pfeilers zwischen der oberen Klingensupportarmposition, einer mittleren Klingensupportarmposition und der unteren Klingensupportarmposition zu bewegen, wobei der Klingensupportarm eine obere Kontaktoberfläche und eine untere Kontaktoberfläche aufweist;
und weiters **gekennzeichnet durch**:
(a) den Kappenrückhaltearm, der eine Kappenkontaktieroberfläche (426) aufweist, die fähig ist, die Behälterkappe zu kontaktieren und zurückzuhalten, wobei der Kappenrückhaltearm gleitbar an dem vertikalen Pfeiler derart festgelegt ist, daß der Kappenrückhaltearm fähig ist, sich entlang des vertikalen Pfeilers zwischen der oberen Kontaktoberfläche des Klingensupportarms und der unteren Kontaktoberfläche des Klingensupportarms zu bewegen; und
(b) ein Vorspannglied (434), um den Kappenrückhaltearm zu der unteren Kontaktoberfläche des Klingensupportarms vorzuspannen bzw. zu beaufschlagen; und worin der Motor fähig ist, den Klingensupportarm nach oben und unten entlang des vertikalen Pfeilers zwischen der oberen Klingensupportarmposition, der mittleren Klingensupportarmposition und der unteren Klingensupportarmposition zu gleiten bzw. zu bewegen; und
worin (i) an der oberen Klingensupportarmposition die untere Kontaktoberfläche des Klingensupportarms den Kappenrückhaltearm so zurückhält, daß die Kappenkontaktoberfläche höher als E ist, (ii) an der mittleren Klingensupportarmposition die Kappenkontaktoberfläche eine Behälterkappe, die an E positioniert ist, kontaktieren kann, jedoch die Klinge höher als E angeordnet ist, und (iii) an der unteren Klingensupportarmposition die Kappenkontaktoberfläche eine Behälterkappe, die bei E angeordnet ist, kontaktieren kann und die Klinge unter E angeordnet ist.

4. Kombination nach Anspruch 3, worin der Klingensupportarm und der Kappenrückhaltearm gleitbar an einem Paar von im wesentlichen vertikalen Lagern bzw. Pfeilern (402), die parallel angeordnet sind, festgelegt sind.

5. Kombination nach Anspruch 3, worin das Vorspannglied (434) wenigstens eine Feder umfaßt.

6. Kombination nach Anspruch 3, worin die die Kappe kontaktierende Oberfläche (426) des Kappenrückhaltearms ausgenommen bzw. abgesetzt ist.

7. Vorrichtung nach Anspruch 1 oder 2, worin die Klinge drei oder mehr Durchlochungsabschnitte (414) umfaßt, wobei jeder Durchlochungsabschnitt in einer vertikalen Ebene angeordnet ist und alle vertikalen Ebenen so angeordnet sind, daß sie sich entlang einer einzigen vertikalen Achse (416) schneiden, wobei jede Ebene von benachbarten Ebenen um gleiche Winkel beabstandet ist.

8. Kombination nach Anspruch 7, worin jeder Durchlochungsabschnitt (414) eine Spitze bzw. einen Punkt (418) umfaßt, welche(r) die Form eines rechtwinkeligen Dreiecks aufweist.

9. Kombination nach Anspruch 7, worin die Klinge vier Durchlochungsabschnitte (414) aufweist, die jeweils von benachbarten Durchlochungsabschnitten um etwa 90° beabstandet sind.

10. Kombination nach Anspruch 1, weiters umfassend eine Vorrichtung zum Bestimmen von wenigstens einem Parameter einer Flüssigkeit in einem oder mehreren verschlossenen Probenbehältern, die in einem Ladebereich angeordnet sind, wobei die Vorrichtung umfaßt:
(a) einen Körper (12);
(b) eine Probenstation (14), die innerhalb des Körpers angeordnet ist, wobei die Probenstation derart bemessen und dimensioniert ist, um eine Mehrzahl von Probenbehältem zurückzuhalten bzw. aufzunehmen;
(c) eine Reagenzstation (16), die innerhalb des Körpers angeordnet ist, wobei die Reagenzstation so bemessen und dimensioniert ist, um eine Mehrzahl von Reagenzbehältern zurückzuhalten bzw. aufzunehmen;
(d) eine Analysierstation (18), die innerhalb des Körpers angeordnet ist, wobei die Analysierstation umfaßt: (1) einen Reaktionsbehälter und (2) eine Analysiervorrichtung, um Flüssigkeiten, die innerhalb des Reaktionsbehälters angeordnet sind, zu analysieren;
(e) einen Probentransfermechanismus, um eine flüssige Probe von der Probenstation und Reagenz von der Reagenzstation zu dem Reaktionsbehälter zu transferieren, wobei der Probentransfermechanismus einen hohlen Probenkopf (94) und einen Probenkopfdruckänderungsmechanismus (112) zum alternativen Aufbringen bzw. Anlegen eines positiven Druckes bzw. Überdrucks und eines negativen Druckes bzw. Unterdrucks auf das hohle Innere des Probenkopfes umfaßt; und
(f) eine Probenbehälterlade- und zubereitungsanordnung, umfassend einen Lademechanismus (70), um einen oder mehrere vertikal angeordnete verschlossene bzw. mit Kappen versehene Probenbehälter von dem Ladebereich zu der Probenstation entlang eines Lademechanismuspfades zu bewegen, worin der Ort der Stopfen bzw. Kappen der Probenbehälter bei L ist und die Kombination zum Durchlochen einer Behälterkappe entlang des Lademechanismuspfades angeordnet ist.

11. Kombination nach Anspruch 1, weiters umfassend eine Vorrichtung zum Bestimmen von wenigstens einem Parameter einer Flüssigkeit in einem oder mehreren, mit Kappen versehenen bzw. verschlossenen Probenbehälter(n), der (die) in einem Ladebereich angeordnet ist (sind), wobei die Vorrichtung umfaßt:
(a) einen Körper (12);
(b) eine motorisierte Probenstation (14), die innerhalb des Körpers angeordnet ist, wobei die Probenstation in der so bemessen und dimensioniert ist, um eine Mehrzahl von Probenbehältem zurückzuhalten bzw. aufzunehmen, und eine Probenextraktionsstelle aufweist, wobei die Probenstation innerhalb des Körpers derart bewegbar ist, daß, wenn die Probenstation eine Mehrzahl von Probenbehältem zurückhält, individuelle Probenbehälter alternativ zu der und weg von der Probenextraktionsstelle bewegt werden können;
(c) eine motorisierte Reagenzstation (16), die innerhalb des Körpers angeordnet ist, wobei die Reagenzstation so bemessen und dimensioniert ist, um eine Mehrzahl von Reagenzbehältern zurückzuhalten, und eine Reagenzextraktionsstelle aufweist, wobei die Reagenzstation innerhalb des Körpers derart bewegbar ist, daß, wenn die Reagenzstation eine Mehrzahl von Reagenzbehältern zurückhält, individuelle Reagenzbehälter alternativ zu der und weg von der Reagenzextraktionsstelle bewegt werden können;
(d) eine motorisierte Direktzugriffsanalysierstation (18), die innerhalb des Körpers angeordnet ist, wobei die Direktzugriffsanalysierstation so bemessen und dimensioniert ist, um eine Mehrzahl von Küvetten zurückzuhalten bzw. aufzunehmen und eine Küvettenprobenlagerstelle, eine Küvettenreagenzlagerstelle, eine Küvettenmischstelle, eine Küvettenwaschstelle, eine Direktzugriffsanalysierstationsanalysierstelle und einen Analysierer umfaßt, der benachbart bzw. nahe der Direktzugriffsanalysierstationsanalysierstelle angeordnet ist, um wenigstens einen Parameter einer Probe zu bestimmen, die innerhalb der Küvetten angeordnet ist, wobei die Direktzugriffsanalysierstation innerhalb des Körpers derart bewegbar ist, daß, wenn die Direktzugriffsanalysierstation eine Mehrzahl von Küvetten zurückhält, individuelle Küvetten alternativ zu (1) der Küvettenmischsteile, (2) der Küvettenwaschstelle und (3) der Direktzugriffsanalysierstationsanalysierstelle und weg von diesen bewegt werden können;
(e) eine Reaktionsbehälteranalysierstation (20), die innerhalb des Körpers angeordnet ist, wobei die Reaktionsbehälteranalysierstation umfaßt: (1) einen Reaktionsbehälter bzw. eine Reaktionsschale, (2) eine Analysiervorrichtung, um Flüssigkeiten, die innerhalb des Reaktionsbehälters angeordnet sind, zu analysieren, und (3) einen Reaktionsbehälteranalysierstationspumpmechanismus, um Reaktionsbehälteranalysierstationsreagenz von einer Quelle von Reaktionsbehälteranalysierstationsreagenz zu dem Reaktionsbehälter zu pumpen und um die Inhalte des Reaktionsbehälters zu einer geeigneten Entsorgungs- bzw, Austragsstelle zu pumpen;
(f) eine ionenselektive Elektrodenanalysierstation (22), die innerhalb des Körpers angeordnet ist, wobei die ionenselektive Analysierstation umfaßt; (1) einen Probaneinspritzbehälter bzw. eine Probeneinspritzschale in fluiddichter Kommunikation mit einer Strömungs- bzw. Flußzellenanalysiervorrichtung, um wenigstens einen Elektrolyten in einer flüssigen Probe zu messen, und (2) einen ionenselektiven Elektrodeanalysierstationspumpenmechanismus, um ionenselektives Elektrodenanalysierstationsreagenz von einer Quelle für ionenselektives Elektrodenanalysierstationsreagenz zu dem Probeneinspritzbehälter zu pumpen und um die Inhalte des Probenbehälters durch die Flußzellenanalysiervorrichtung und dann zu einer geeigneten Austragsstelle zu pumpen;
(g) eine motorisierte Probensensorarmanordnung (90), die an dem Körper festgelegt ist, wobei die Probensensorarmanordnung beinhaltet (1) einen Probensensorarm und (2) einen hohlen Probensensor, der eine Innenkammer, ein unteres offenes Ende und ein oberes offenes Ende aufweist, wobei der Probensensor im allgemeinen vertikal angeordnet ist, wobei der Probensensor vertikal zwischen einer unteren Probensensorposition und einer oberen Probensensorposition bewegbar ist, wobei der Probensensorarm zwischen einer ersten Probensensorarmposition, worin der Probensensor unmittelbar Ober der Probenextraktionsstelle angeordnet ist, und einer zweiten Probensensorarmposition bewegbar ist, worin der Probensensor unmittelbar über der Küvettenprobenaustragsstelle angeordnet ist;
(h) einen Probensensordruckänderungsmechanismus (112), um alternativ einen positiven Druck bzw. Überdruck und einen negativen Druck bzw, Unterdruck auf die Innenkammer des Probensensors aufzubringen bzw, anzulegen;
(i) eine motorisierte Reagenzsensorarmanordnung (114), die an dem Körper festgelegt ist, wobei die Reagenzsensorarmanordnung umfaßt (1) einen Reagenzsensorarm und (2) einen hohlen Reagensensor, der eine Innenkammer, ein offenes unteres Ende und ein offenes oberes Ende aufweist, wobei der Reagenzsensor allgemein vertikal angeordnet ist, wobei der Reagenzsensor vertikal zwischen einer unteren Reagenzsensorposition und einer oberen Reagenzsensorposition bewegbar ist, wobei der Reagenzsensorarm zwischen einer ersten Reagenzsensorarmposition, worin der Reagenzsensor unmittelbar über der Reagenzextraktionsstelle angeordnet ist, und einer zweiten Reagenzsensorarmposition bewegbar ist, worin der Reagenzsensor unmittelbar über der Küvettenreagenzaustrags- bzw, -hinterlegungsstelle angeordnet ist;
(j) einen Reagenzsensordruckänderungsmechanismus (118) zum alternativen Aufbringen eines positiven Drucks und eines negativen Drucks auf die Innenkammer des Reagenzsensors;
(k) eine motorisierte Küvettenrührstabarmanordnung (156), die an dem Körper festgelegt ist, wobei die Küvettenrührstabarmanordnung einen verlängerten bzw. länglichen drehbaren Küvettenrührstab beinhaltet, der ein unteres Ende und ein oberes Ende aufweist, wobei das untere Ende des Küvettenrührstabes ein Küvettenrührstabpaddel daran festgelegt aufweist, wobei der Küvettenrührstab allgemein vertikal angeordnet ist, der Küvettenrührstab zwischen einer unteren Küvettenrührstabposition und einer oberen Küvettenrührstabposition bewegbar ist, wobei der Küvettenrührstabarm über der Küvettenmischstelle anordenbar ist; (I) eine Schalen- bzw. Behälteranalysensensorarmanordnung (134), die an dem Körper angelenkt ist, wobei die Behälteranalysensensorarmanordnung umfaßt (1) einen motorisierten Schalen- bzw. Behälteranalysensensorarm und (2) einen hohlen motorisierten Behälteranalysensensor, der eine Innenkammer, ein offenes unteres Ende und ein offenes oberes Ende aufweist, wobei der Behälteranalysensensor vertikal zwischen einer unteren Behälteranalysensensorposition und einer oberen Behälteranalysensensorposition bewegbar ist, wobei der Behälterenalysensensorarm zwischen einer ersten Behälteranalysensensorarmposition, worin der Behälteranalysensensor unmittelbar über einem Probenbehälter bzw. -container angeordnet ist, und einer zweiten Behälteranalysensensorarmposition, worin der Behälteranalysensensor unmittelbar über einem Reaktionsbehälter bzw. der Reaktionsschale angeordnet ist, und einer dritten Behälteranalysensensorarmposition bewegbar ist, worin der Behälteranalysensensor unmittelbar über der Einspritzprobenschale angeordnet ist;
(m) einen Druckänderungsmechanismus (136) des Behälteranalysensensors, um abwechselnd einen positiven Druck und einen negativen Druck auf die Innenkammer des Behälteranalysensensors anzulegen;
(n) eine Küvettenwaschstation (166), die an dem Körper angelenkt ist, wobei die Küvettenwaschstation einen hohlen motorisierten Küvettenwaschstationssensor umfaßt, der eine Innenkammer, ein offenes unteres Ende und ein offenes oberes Ende aufweist, wobei die Küvettenwaschstation so angeordnet ist, daß der Küvettenwaschstationssensor unmittelbar über der Küvettenwaschstelle angeordnet ist;
(o) eine Probenbehälterlade- und -zubereitungsanordnung, umfassend einen Lademechanismus (70), um einen oder mehrere vertikal angeordnete verschlossene bzw. mit Kappen versehene Probenbehälter von dem Ladebereich zu der Probenstation entlang eines Lademechanismuspfades zu bewegen, wobei die Höhe der Kappen der Probenbehälter E ist, worin die Kombination zum Durchlochen der Kappe der Probenbehälter entlang des Lademechanismuspfades und stromaufwärts von der Probenextraktionsstelle angeordnet ist.

## Revendications

1. Combinaison pour transpercer un capuchon de récipient disposé sur le dessus d'un récipient à un emplacement L, la combinaison comprenant une base (400), un bras de support de lame (404) fixé d'une manière mobile à la base, ainsi qu'une lame (412) fixée au bras de support de lame, la combinaison étant **caractérisée par** :
(a) la lame comprend plusieurs sections de perçage (414), chaque section de perçage étant disposée dans un plan vertical, chaque section de perçage comprenant un point de perçage (418), les points de perçage respectifs étant espacés les uns les autres ;
(b) le bras de support de lame est fixé à la base de telle sorte que le bras de support de lame peut exécuter un mouvement vertical entre une première position de bras de support de lame, où la lame est espacée de l'emplacement L et une seconde position de bras de support de lame où la lame est disposée directement en dessous de l'emplacement L ; et
(c) un moyen pour provoquer le mouvement du bras de support de lame de la première position de bras de support de lame à la seconde position de bras de support de lame ;
de telle sorte que lorsqu'un capuchon de récipient est disposé à l'emplacement de retenue de capuchon L, le capuchon du récipient peut être transpercé par le mouvement descendant de la lame lorsque le bras de support de lame se déplace de la première position de bras de support de lame à la seconde position de bras de support de lame.

2. Combinaison selon la revendication 1, **caractérisée en outre par** :
(a) un bras de retenue de capuchon (420) fixé d'une manière mobile à la base, le bras de retenue de capuchon présentant une surface contactant le capuchon apte à venir en contact et à retenir le capuchon du récipient, le bras de retenue de capuchon étant fixé à la base de telle manière que le bras de retenue de capuchon peut effectuer un mouvement entre une première position de bras de retenue de capuchon, où la surface contactant le capuchon est espacée de l'emplacement L et une seconde position de bras de retenue de capuchon où la surface retenant le capuchon est disposée sensiblement à l'emplacement L ; et
(b) un moteur (436) pour provoquer le mouvement en série (i) du bras de retenue de capuchon de la première position de bras de retenue de capuchon à la seconde position de bras de retenue de capuchon, (ii) du bras de support de lame de la première position de bras de support de lame à la seconde position de bras de support de lame, (iii) du bras de support de lame de la seconde position de bras de support de lame à la première position de bras de support de lame, et (iv) du bras de retenue de capuchon de la seconde position de bras de retenue de capuchon à la première position de bras de retenue de capuchon ;
de telle sorte que, lorsqu'un capuchon de récipient est disposé à l'emplacement L, le capuchon du récipient peut être en série (i) retenu par le bras de retenue de capuchon, (ii) transpercé par la lame, (iii) libéré du contact avec la lame, et (iv) libéré du contact avec le bras de retenue du capuchon.

3. Combinaison selon la revendication 2, où le dessus du récipient se situe à une élévation E, où le bras de support de lame est fixé d'une manière coulissante à un montant sensiblement vertical (402) de telle sorte que le bras de support de lame est apte à se déplacer le long du montant vertical entre la position supérieure du bras de support de lame, une position médiane du bras de support de lame et une position inférieure du bras de support de lame, le bras de support de lame ayant une surface de contact supérieure et une surface de contact inférieure ;
et **caractérisée en outre par** :
(a) le bras de retenue du capuchon possédant une surface de contact avec le capuchon (426) apte à venir en contact avec et à retenir le capuchon du récipient, le bras de retenue du capuchon étant fixé d'une manière coulissante au montant vertical de telle sorte que le bras de retenue du capuchon est apte à se déplacer le long du montant vertical entre la surface de contact supérieure du bras de support de la lame et la surface de contact inférieure du bras de support de la lame ; et
(b) un élément de sollicitation (434) pour solliciter le bras de retenue du capuchon vers la surface de contact inférieure du bras de support de la lame ; et
où le moteur est apte à faire coulisser le bras de support de lame vers le haut et vers le bas le long du montant vertical entre la position supérieure du bras de support de lame, la position médiane du bras de support de lame et la position inférieure du bras de support de lame ; et
où, (i) à la position supérieure du bras de support de lame, la surface de contact inférieure du bras de support de lame retient le bras de retenue du capuchon de façon que la surface de contact avec le capuchon soit plus haute que E, (ii) à la position médiane du bras de support de lame, la surface de contact avec le capuchon peut venir en contact avec le capuchon du récipient disposé en E, mais la lame est disposée pour être plus haute que E et (iii) à la position inférieure du bras de support de lame, la surface de contact avec le capuchon peut venir en contact avec un capuchon du récipient disposé à E, et la lame est disposée en dessous de E.

4. Combinaison selon la revendication 3, où le bras de support de lame et le bras de retenue de capuchon sont fixés d'une manière coulissante à deux montants sensiblement verticaux (402) disposés en parallèle.

5. Combinaison selon la revendication 3, où l'élément de sollicitation (434) comprend au moins un ressort.

6. Combinaison selon la revendication 3, où la surface de contact avec le capuchon (426) du bras de retenue du capuchon est évidée.

7. Dispositif selon les revendications 1 ou 2, où la lame comprend trois sections de perçage (414) ou plus, chaque section de perçage étant disposée dans un plan vertical, et tous les plans verticaux sont disposés de manière à se croiser le long d'un seul axe vertical (416), chaque plan étant espacé des plans adjacents selon des angles égaux.

8. Combinaison selon la revendication 7, où chaque section de perçage (414) comprend un point (418) qui a la forme d'un triangle droit.

9. Combinaison selon la revendication 7, où la lame comprend quatre sections de perçage (414), chacune espacée des sections de perçage adjacentes selon environ 90 degrés.

10. Combinaison selon la revendication 1, comprenant en outre un dispositif pour déterminer au moins un paramètre d'un liquide dans un ou plusieurs récipients d'échantillons munis d'un capuchon disposés dans une zone de chargement, le dispositif comprenant :
(a) un corps (12) ;
(b) un poste d'échantillon (14) disposé dans le corps, le poste d'échantillon étant dimensionné pour retenir plusieurs récipients d'échantillons ;
(c) un poste de réactif (16) disposé dans le corps, le poste de réactif étant dimensionné pour retenir plusieurs récipients de réactifs ;
(d) un poste d'analyse (18) disposé dans le corps, le poste d'analyse comprenant : (1) un récipient de réaction et (2) un analyseur pour analyser des liquides introduits dans le récipient de réaction ;
(e) un mécanisme de transfert d'échantillon pour transférer un échantillon liquide du poste d'échantillon et le réactif du poste de réactif au récipient de réaction, le mécanisme de transfert d'échantillon comprenant une sonde d'échantillon creuse (94) et un mécanisme de modification de la pression (112) de la sonde d'échantillon pour appliquer alternativement une pression positive et une pression négative à l'intérieur creux de la sonde d'échantillon ; et
(f) un ensemble de chargement et de préparation de récipient d'échantillon comprenant un mécanisme de changement (70) pour déplacer un ou plusieurs récipients d'échantillons munis de capuchons, disposés verticalement, de la zone de chargement au poste d'échantillon le long d'un chemin de mécanisme de chargement, où l'emplacement des capuchons des récipients d'échantillon se trouve à L, et la combinaison pour transpercer un capuchon de récipient est disposée le long du chemin du mécanisme de chargement.

11. Combinaison selon la revendication 1, comprenant en outre un dispositif pour déterminer au moins un paramètre d'un liquide dans un ou plusieurs récipients d'échantillons munis d'un capuchon disposés dans une zone de chargement, le dispositif comprenant :
(a) un corps (12) ;
(b) un poste d'échantillon motorisé (14) disposé dans le corps, le poste d'échantillon étant dimensionné pour retenir plusieurs récipients d'échantillons et présentant un site d'extraction d'échantillon, le poste d'échantillon étant déplaçable dans le corps de façon que, lorsque le poste d'échantillon retient plusieurs récipients d'échantillon, des récipients d'échantillon individuels peuvent être amenés alternativement vers et au loin du site d'extraction d'échantillon ;
(c) un poste de réactif motorisé (16) disposé dans le corps, le poste de réactif étant dimensionné pour retenir plusieurs récipients de réactif et présentant un site d'extraction de réactif, le poste de réactif étant déplaçable dans le corps de telle sorte que lorsque le poste de réactif retient plusieurs récipients de réactif, des récipients de réactif individuels peuvent être amenés alternativement vers et au loin de ce site d'extraction de réactif ;
(d) un poste d'analyse motorisé à accès direct (18) disposé dans le corps, le poste d'analyse à accès direct étant dimensionné pour retenir plusieurs cuvettes et possédant un site de dépôt d'échantillon de cuvette, un site de dépôt de réactif de cuvette, un site de mélange de cuvette, un site de lavage de cuvette, un site d'analyse de poste d'analyse à accès direct et un analyseur disposé à proximité du site d'analyse du poste d'analyse à accèes direct pour déterminer au moins un paramètre d'un échantillon disposé dans les cuvettes, le poste d'analyse à accès direct étant déplaçable dans le corps de façon que, lorsque le poste d'analyse à accès direct retient plusieurs cuvettes, des cuvettes individuelles peuvent être amenées alternativement vers et au loin (1) du site de mélange de cuvette, (2) du site de lavage de cuvette et (3) du site d'analyse du poste d'analyse à accès direct ;
(e) un poste d'analyse de godet de réaction (20) disposé dans le corps, le poste d'analyse de godet de réaction comprenant : (1) un godet de réaction, (2) un analyseur pour analyser des liquides disposés dans le godet de réaction et (3) un mécanisme de pompage du poste d'analyse de godet de réaction pour pomper le réactif du poste d'analyse de godet de réaction d'une source de réactif du poste d'analyse de godet de réaction au godet de réaction et pour pomper les contenus du godet de réaction à un site de rebut approprié ;
(f) un poste d'analyse d'électrode sélectif d'ions (22) disposé dans le corps, le poste d'analyse sélectif d'ions comprenant : (1) un godet d'injection d'échantillon en communication fluidique étanche avec un analyseur de cuve à circulation pour mesurer au moins un électrolyte dans un échantillon liquide et (2) un mécanisme de pompage de poste d'analyse d'électrode sélectif d'ions pour pomper un réactif de poste d'analyse d'électrode sélectif d'ions d'une source de réactif de poste d'analyse d'électrode sélectif d'ions au godet d'injection d'échantillon et pour pomper le contenu du godet de réaction d'échantillon vers l'analyseur de cuve à circulation et ensuite à un site de rebut approprié ;
(g) un ensemble de bras de sonde d'échantillon motorisé (90) fixé au corps, l'ensemble de bras de sonde d'échantillon comprenant (1) un bras de sonde d'échantillon et (2) une sonde d'échantillon creuse présentant une chambre interne, une extrémité inférieure ouverte et une extrémité supérieure ouverte, la sonde d'échantillon étant disposée généralement verticalement, la sonde d'échantillon étant déplaçable verticalement entre une position inférieure de sonde d'échantillon et une position supérieure de sonde d'échantillon, le bras de sonde d'échantillon étant déplaçable entre une première position de bras de sonde d'échantillon où la sonde d'échantillon se situe directement au-dessus du site d'extraction d'échantillon, et une deuxième position de bras de sonde d'échantillon où la sonde d'échantillon se trouve directement au-dessus du site de dépôt d'échantillon de cuvette ;
(h) un mécanisme de modification de pression de sonde d'échantillon (112) pour appliquer alternativement une pression positive et une pression négative à la chambre intérieure de la sonde d'échantillon ;
(i) un ensemble formant bras de sonde de réactif motorisé (114) fixé au corps, l'ensemble formant bras de sonde de réactif comprenant (1) un bras de sonde de réactif et (2) une sonde de réactif creuse présentant une chambre interne, une extrémité inférieure ouverte et une extrémité supérieure ouverte, la sonde de réactif étant disposée généralement verticalement, la sonde de réactif étant déplaçable verticalement entre une position inférieure de sonde de réactif et une position supérieure de sonde de réactif, le bras de sonde de réactif étant déplaçable entre une première position de bras de sonde de réactif, où la sonde de réactif est directement au-dessus du site d'extraction de réactif et une deuxième position de bras de sonde de réactif où la sonde de réactif se trouve directement au-dessus du site de dépôt de réactif de cuvette ;
(j) un mécanisme (118) modifiant la pression de la sonde de réactif pour appliquer alternativement une pression positive et une pression négative à la chambre intérieure de la sonde de réactif ;
(k) un ensemble de bras à tige d'agitation de cuvette motorisé (156) fixé au corps, l'ensemble de bras à tige d'agitation de cuvette comprenant une tige d'agitation de cuvette tournante oblongue présentant une extrémité inférieure et une extrémité supérieure, l'extrémité inférieure de la tige d'agitation de cuvette comprenant une palette de tige d'agitation de cuvette fixée à celle-ci, la tige d'agitation de la cuvette étant disposée généralement verticalement, la tige d'agitation de cuvette étant déplaçable entre une position inférieure de la tige d'agitation de cuvette et une position supérieure de la tige d'agitation de la cuvette, le bras de la tige d'agitation de la cuvette pouvant être positionné au-dessus du site de mélange de cuvette ;
(1) un ensemble de bras de sonde d'analyse de godet (134) fixé au corps, l'ensemble de bras de sonde d'analyse de godet incluant (1) un bras de sonde d'analyse de godet motorisé et (2) une sonde d'analyse de godet motorisée creuse présentant une chambre interne, une extrémité inférieure ouverte et une extrémité supérieure ouverte, la sonde d'analyse de godet étant déplaçable verticalement entre une position inférieure de sonde d'analyse de godet et une position supérieure de sonde d'analyse de godet, le bras de sonde d'analyse de godet étant déplaçable entre une première position de bras de sonde d'analyse de godet, où la sonde d'analyse de godet se situe directement au-dessus d'un récipient d'échantillon, une deuxième position de bras de sonde d'analyse de godet où la sonde d'analyse de godet se trouve directement au-dessus du godet de réaction, et une troisième position de bras de sonde d'analyse de godet où la sonde d'analyse de godet se situe directement au-dessus du godet d'échantillon d'injection ;
(m) un mécanisme de modification de la pression de la sonde d'analyse de godet (138) pour appliquer alternativement une pression positive et une pression négative à la chambre intérieure de la sonde d'analyse de godet ;
(n) un poste de lavage de cuvette (166) fixé au corps, le poste de lavage de cuvette comprenant une sonde de poste de lavage de cuvette motorisée creuse présentant une chambre interne, une extrémité inférieure ouverte et une extrémité supérieure ouverte, le poste de lavage de cuvette étant disposé de façon que la sonde de poste de lavage de cuvette se situe directement au-dessus du site de lavage de cuvette ;
(o) un ensemble de chargement et de préparation de récipient d'échantillon comprenant un mécanisme de chargement (70) pour déplacer un ou plusieurs récipients d'échantillon disposés verticalement, munis d'un capuchon, de la zone de chargement au poste d'échantillon le long d'un chemin du mécanisme de chargement, où l'élévation des capuchons des récipients d'échantillon est E, où la combinaison pour transpercer le capuchon des récipients d'échantillon est disposée le long du chemin du mécanisme de chargement et en amont du site d'extraction d'échantillon.
